(19) Europäisches Patentamt
European Patent Office
Office européen des brevets

(11) **EP 1 007 842 B1**

(12) **EUROPÄISCHE PATENTSCHRIFT**

(45) Veröffentlichungstag und Bekanntmachung des Hinweises auf die Patenterteilung:
**15.12.2004 Patentblatt 2004/51**

(21) Anmeldenummer: **98951171.2**

(22) Anmeldetag: **19.08.1998**

(51) Int Cl.7: **F02P 5/152**, G01L 23/22

(86) Internationale Anmeldenummer:
**PCT/DE1998/002420**

(87) Internationale Veröffentlichungsnummer:
**WO 1999/010652 (04.03.1999 Gazette 1999/09)**

(54) **VERFAHREN ZUR KLOPFREGELUNG EINER BRENNKRAFTMASCHINE**

KNOCK ADJUSTMENT METHOD FOR AN INTERNAL COMBUSTION ENGINE

PROCEDE DE REGULATION DU CLIQUETIS DANS UN MOTEUR A COMBUSTION INTERNE

(84) Benannte Vertragsstaaten:
**DE FR GB**

(30) Priorität: **22.08.1997 DE 19736650**

(43) Veröffentlichungstag der Anmeldung:
**14.06.2000 Patentblatt 2000/24**

(73) Patentinhaber: **SIEMENS AKTIENGESELLSCHAFT**
**80333 München (DE)**

(72) Erfinder:
• **BRIELBECK, Gerhard**
**D-94347 Ascha (DE)**
• **KLECZKA, Wilfried**
**D-93057 Regensburg (DE)**

(56) Entgegenhaltungen:
**EP-A- 0 399 068**     **US-A- 5 140 962**
**US-A- 5 287 837**

• **PATENT ABSTRACTS OF JAPAN vol. 015, no. 366 (M-1158), 13. September 1991 & JP 03 145551 A (MITSUBISHI ELECTRIC CORP), 20. Juni 1991**

**Beschreibung**

Die Erfindung betrifft ein Verfahren zur Klopfregelung einer Brennkraftmaschine nach dem Oberbegriff des Anspruchs 1.

Ausgangspunkt für eine Klopfregelung einer mehrzylindrigen Brennkraftmaschine ist eine Klopfschwelle KS für jeden einzelnen Zylinder (die kleiner oder gleich einer vorgegebenen, für alle Zylinder gültigen, maximalen Klopfschwelle $KS_{max}$ ist), die in der Regel von Klopfsensorsignalen oder von aus diesen Klopfsignalen ermittelten Klopfwerten KW (im folgenden Klopfwerte genannt) dieses Zylinders gebildet wird und mit welcher diese Klopfwerte verglichen werden. Wird die Klopfschwelle KS von den Klopfwerten KW überschritten, wird auf Motorklopfen entschieden und beispielsweise der Zündzeitpunkt für diesen Zylinder in Richtung "spät" verstellt; wird die Klopfschwelle längere Zeit nicht überschritten, wird der Zündzeitpunkt langsam wieder nach "früh" verstellt.

Nehmen Klopfwerte mehrmals hintereinander einen hohen Wert an, so wird die aus ihnen berechnete Klopfschwelle immer weiter erhöht, wodurch immer höhere Klopfwerte erforderlich sind, um diese Schwelle zu überschreiten. Die Klopfregelung wird unempfindlicher (Motorklopfen wird nicht erkannt) und die Gefahr einer Motorschädigung steigt.

Aus EP 0 399 068 B1 ist ein zylinderselektives Klopfregelverfahren bekannt, bei welchem Sensorsignale eines Klopfsensors innerhalb eines für jeden Zylinder vorgebbaren Meßfensters in einem bestimmten Drehwinkelbereich der Motorkurbelwelle mit einer vorgegebenen Abtastfrequenz abgetastet werden. Aus einer vorgegebenen Zahl der größten Abtastwerte jedes Meßfensters wird dort, beispielsweise durch Mittelwertbildung, ein Klopfwert KW ermittelt und aus einer vorgegebenen Zahl vorangegangener Klopfwerte KW, beispielsweise durch gleitende Mittelwertbildung, ein variabler Geräuschwert GW berechnet, aus welchem eine Klopfschwelle KS ermittelt wird, beispielsweise KS = (GW + S).F oder KS = GW*F +S, wobei S ein Klopfsummand und F ein Klopffaktor ist; beide Größen sind entweder vorgegebene Werte oder als Funktion wenigstens eines Betriebsparameters (Motordrehzahl n, Last L, u.s.w.) in Tabellen, vorzugsweise als Funktion von Motordrehzahl n und Last L in Kennfeldern abgelegt. Beide Größen dienen zur Feinabstimmung der Klopfschwelle, um auch bei schwierigen Randbedingungen, beispielsweise bei schlechtem Signal/Rausch-Verhältnis bei sehr niedrigen Motordrehzahlen, eine gute Klopferkennung zu gewährleisten.

Der Geräuschwert GW kann einfacher aus dem aktuellen Klopfwert KW und dem vorherigen Geräuschwert GW, in welchem die vorangegangenen Klopfwerte implizit enthalten sind, ermittelt werden.

Um zu verhindern, daß die Klopfregelung, wie oben beschrieben, immer unempfindlicher wird, ist beim Gegenstand nach der EP 0 399 068 B1 vorgesehen, Klopfwerte, die einen vorgegebenen Wert überschreiten, nicht zur Berechnung des Geräuschwertes GW heranzuziehen.

Gehen diese Klopfwerte mit dem Wert "0" in die Berechnung ein, so kann bei intensivem Klopfen die Klopfschwelle immer niedriger werden und immer öfter Motorklopfen detektiert werden, obwohl dann kein Motorklopfen auftritt; in diesem Fall kann es geschehen, daß der Zündzeitpunkt immer weiter nach spät verstellt wird.

Wird aber, was sinnvoller ist, nur auf nicht als klopfend gewertete Klopfwerte zurückgegriffen, so kann der Fall auftreten, daß die Klopfschwelle KS durch mehrmals nur knapp unter KS liegende Klopfwerte KW immer weiter erhöht und die Klopfregelung immer unempfindlicher wird.

Aufgabe der Erfindung ist es, das bekannte Klopfregelverfahren so zu gestalten, daß weder eine unzulässige Erhöhung der Klopfschwelle durch zu hohe Klopfwerte noch eine Erniedrigung der Klopfschwelle durch Nichtberücksichtigung hoher Klopfwerte erfolgt.

Diese Aufgabe wird erfindungsgemäß dadurch gelöst, daß jeder ermittelte Klopfwert KW mit einem Grenzwert g verglichen wird und im Falle, daß er größer als dieser Grenzwert g ist, für die Berechnung von Geräuschwert GW und Klopfschwelle KS durch einen Ersatzwert E ersetzt wird: für KW > g → KW = E.

Der Grenzwert g ist entweder, wie Klopfsummand S und Klopffaktor F, ein vorgegebener Wert oder als Funktion wenigstens eines Betriebsparameters (Motordrehzahl n, Last L, u.s.w.) in Tabellen, vorzugsweise als Funktion von Motordrehzahl n und Last L in Kennfeldern abgelegt, oder er wird jedesmal, beispielsweise aus dem Wert einer für alle Zylinder gültigen, maximalen Klopfschwelle $KS_{max}$ und den betriebsparameterabhängigen Werten Klopffaktor F und Klopfsummand S entsprechend den nachstehenden Formeln neu berechnet:

$$g = \frac{KS_{max}}{F} - S \quad \text{oder} \quad g = \frac{KS_{max} - S}{F}.$$

Der Ersatzwert E, durch den der ermittelte Klopfwert KW ersetzt wird, wenn dieser größer als der Grenzwert g ist, ist entweder ein vorgegebener Wert oder als Funktion wenigstens eines Betriebsparameters (Motordrehzahl n, Last L, u.s.w.) in Tabellen, vorzugsweise als Funktion von Motordrehzahl n und Last L in Kennfeldern abgelegt, oder er wird einfacherweise gleich dem Grenzwert g gesetzt: E = g.

Für den Fall, daß, wie beschrieben, Grenzwerte g in Tabellen oder Kennfeldern gespeichert sind, ergibt sich ein einfacher und schnell durchzuführender Vergleich des ermittelten Klopfwertes KW mit dem aus einer Tabelle oder einem Kennfeld entnommenen Grenzwert g. Andernfalls muß der Grenzwert g berechnet werden.

Ein einfacher und schnell durchzuführender Ersatz des Klopfwertes KW durch den Ersatzwert E ergibt sich auch, da der Ersatzwert E entweder aus einer Tabelle oder aus einem Kennfeld entnommen wird oder gleich dem Grenzwert g gesetzt wird.

Die jeweiligen Kennfeldpunkte der Kennfelder für Klopffaktor F, Klopf summand S, Grenzwert g und Ersatzwert E entsprechen dabei dem Betriebspunkt, in welchem sich der Zylinder bei der Ermittlung des Klopfwertes KW befunden hat.

Die maximale Klopfschwelle $KS_{max}$ ist entweder ein vorgegebener Wert oder als Funktion wenigstens eines Betriebsparameters (Motordrehzahl n, Last L, u.s.w.) in einem für alle Zylinder gültigen Kennfeld (oder einer Tabelle) gespeichert, während die Größen Klopffaktor F, Klopfsummand S, Grenzwert g und Ersatzwert E als Funktion wenigstens eines Betriebsparameters (Motordrehzahl n, Last L, u.s.w.) jeweils entweder in für alle Zylinder gültigen Kennfeldern (oder Tabellen) oder jeweils in zylinderindividuellen Kennfeldern (oder Tabellen) gespeichert sind.

Auf diese Weise wird - für jeden Zylinder - sichergestellt, daß der Geräuschwert GW das Geräuschverhalten des Zylinders wiedergibt, ohne zu hohe oder zu niedrige Werte anzunehmen, d.h., daß auch beim gehäuften Auftreten von hohen Klopfwerten KW sowohl der Geräuschwert GW als auch die davon abhängige Klopfschwelle KS praxisgerechte Werte annehmen.

Bei nicht zylinderselektiven Kennfeldern oder Tabellen werden die Werte wie für einen einzigen Zylinder berechnet bzw. vorgegeben und auf alle übrigen Zylinder übertragen.

## Patentansprüche

1. Verfahren zur Klopfregelung einer Brennkraftmaschine, wobei aus Signalen wenigstens eines Klopfsensors innerhalb eines für jede Zündung vorgebbaren Meßfensters Klopfwerte (KW) gebildet werden, wobei aus Klopfwerten (KW) Geräuschwerte (GW) und aus diesen Geräuschwerten (GW) Klopfschwellen (KS) gebildet werden, mit denen die Klopfwerte (KW) verglichen werden, und wobei auf Motorklopfen erkannt wird, wenn der Klopfwert (KW) die Klopfschwelle (KS) übersteigt,
**dadurch gekennzeichnet,**
**daß** jeder ermittelte Klopfwert (KW) mit einem Grenzwert (g) verglichen wird, und
**daß** der Klopfwert (KW) für die Berechnung von Geräuschwert (GW) und Klopfschwelle (KS) durch einen Ersatzwert (E) ersetzt wird, wenn er den Grenzwert (g) übersteigt.

2. Verfahren nach Anspruch 1, **dadurch gekennzeichnet, daß** der Grenzwert (g) gemäß der Formel

$$g = \frac{KS_{max}}{F} - S \quad \text{oder} \quad g = \frac{KS_{max} - S}{F}$$

gebildet wird (mit F = Klopffaktor, S = Klopfsummand, und $KS_{max}$ = eine für alle Zylinder gültige maximale Klopfschwelle).

3. Verfahren nach Anspruch 2, **dadurch gekennzeichnet, daß** die für alle Zylinder gültige maximale Klopfschwelle ($Ks_{max}$) entweder ein vorgegebener Wert ist oder als Funktion wenigstens eines Betriebsparameters (Motordrehzahl n, Last L, u.s.w.) in einem Kennfeld oder einer Tabelle gespeichert ist.

4. Verfahren nach Anspruch 1, **dadurch gekennzeichnet, daß** die Größen Klopffaktor (F), Klopfsummand (S), Grenzwert (g) und Ersatzwert (E) entweder vorgegebene Werte sind oder als Funktion wenigstens eines Betriebsparameters (Motordrehzahl n, Last L, u.s.w.) jeweils entweder in für alle Zylinder gültigen Tabellen oder Kennfeldern oder jeweils in zylinderindividuellen Tabellen oder Kennfeldern gespeichert sind.

5. Verfahren nach Anspruch 1, **dadurch gekennzeichnet, daß** der Ersatzwert (E) gleich dem Grenzwert (g) ist.

## Revendications

1. Procédé pour régler le cognement d'un moteur à combustion interne, dans lequel des valeurs de cognement (KW) sont constituées à partir de signaux d'au moins un capteur de cognement au cours d'une fenêtre de mesure pouvant être prédéterminée pour chaque allumage, des valeurs de bruit (GW) étant constituées à partir des valeurs de cognement (KW), des seuils de cognement (KS) étant constitués à partir de ces valeurs de bruit (GW), et les valeurs de cognement (KW) étant comparées aux seuils de cognement (KS), et dans lequel on identifie un cognement du moteur quand la valeur de cognement (KW) dépasse le seuil de cognement (KS),
**caractérisé en ce que**,
chaque valeur de cognement (KW) déterminée est comparée avec une valeur limite (g), et
la valeur de cognement (KW) est remplacée par une valeur de remplacement (E) pour le calcul de la valeur de bruit (GW) et du seuil de cognement (KS) lorsqu'elle dépasse la valeur limite (g).

2. Procédé selon la revendication 1, **caractérisé en ce que** la valeur limite (g) est déterminée selon la formule :

$$g = \frac{KS_{max}}{F} - S \text{ ou } g = \frac{KS_{max} - S}{F}$$

(avec F = facteur de cognement, S = nombre de cognement à ajouter, et $KS_{max}$ = un seuil de cognement maximal valable pour tous les cylindres).

**3.** Procédé selon la revendication 2, **caractérisé en ce que**, le seuil de cognement maximal ($KS_{max}$) valable pour tous les cylindres est soit une valeur prédéterminée, soit il est mémorisé dans un champ caractéristique ou un tableau en fonction d'au moins un paramètre de fonctionnement (nombre de tours du moteur n, charge L, etc.).

**4.** Procédé selon la revendication 1, **caractérisé en ce que** les grandeurs :

facteur de cognement (F), nombre de cognement à ajouter (S), valeur limite (g) et valeur de remplacement (E) sont soit des valeurs prédéterminées, soit elles sont mémorisées en fonction d'au moins un paramètre de fonctionnement (nombre de tours du moteur n, charge L, etc.) chacune soit dans des tableaux ou des champs caractéristiques valables pour tous les cylindres soit dans des tableaux ou des champs caractéristiques individuels aux cylindres.

**5.** Procédé selon la revendication 1, **caractérisé en ce que** la valeur de remplacement (E) est égale à la valeur limite (g).

**Claims**

**1.** Method for knock control of an internal combustion engine, whereby knock values (KW) are formed from signals of at least one knocking sensor within a measurement window which can be predefined for each ignition, whereby noise values (GW) are formed from knock values (KW) and knock thresholds (KS) from these noise values (GW), with which knock thresholds the knock values (KW) are compared, and whereby engine knock is identified if the knock value (KW) exceeds the knock threshold (KS),
**characterised in that**
each knock value (KW) determined is compared to a limit value (g), and
**in that** the knock value (KW) is replaced for the calculation of noise value (GW) and knock threshold (KS) by a replacement value (E) if it exceeds the limit value (g).

**2.** Method according to Claim 1, **characterised in that** the limit value (g) is formed according to the formula

$$g = \frac{KS_{max}}{F} - S \text{ or } g = \frac{KS_{max} - S}{F}$$

(where F = knock factor, S = knock summand, and $KS_{max}$ = a maximum knock threshold valid for all cylinders).

**3.** Method according to Claim 2, **characterised in that** the maximum knock threshold ($KS_{max}$) valid for all cylinders is either a predefined value or is stored as a function of at least one operating parameter (engine speed n, load L, etc.) in a characteristic field or a table.

**4.** Method according to Claim 1, **characterised in that** the variables knock factor (F), knock summand (S), limit value (g) and replacement value (E) are either predefined values or are stored as a function of at least one operating parameter (engine speed n, load L, etc.) in each case either in tables or characteristic fields valid for all cylinders or in each case in tables or characteristic fields individual to each cylinder.

**5.** Method according to Claim 1, **characterised in that** the replacement value (E) is equal to the limit value (g).